# EUROPEAN PATENT APPLICATION

(11) **EP 3 190 309 A1**
(43) Date of publication of application: **12.07.2017**
(21) Application number: 15838148.3
(22) Date of filing: 31.08.2015
(51) Int. Cl.: F16F 15/129, F16F 7/04, F16H 55/14

(54) **BALANCE SHAFT FRICTION DAMPER**

(30) Priority: 03.09.2014 JP 2014179430
(71) Applicant: NOK Corporation, Tokyo 105-8585 (JP)
(72) Inventor: ARAI Hidenori, Fukushima-shi Fukushima 960-1193 (JP)
(74) Representative: Nordic Patent Service A/S
(86) International application number: PCT/JP2015/074746
(87) International publication number: WO 2016/035762

(57) **Abstract**

The present invention has an object to provide a balance shaft friction damper (1) capable of preventing a torque reduction of a lip sliding surface while ensuring an axial flow path for a lubricant to stably circulate the lubricant. The object is achieved by a balance shaft friction damper (1) including: a metal mounting ring (10) that is mounted in an annular gap (300) between a shaft portion (100) of a balance shaft of an engine and a gear portion (200) provided on an outer periphery of the shaft portion (100), and has a fitting surface (11a) fitted and secured to one of an outer peripheral surface (101) of the shaft portion (100) and an inner peripheral surface (201) of the gear portion (200); and an annular elastic ring member (20) made of a rubber-like elastic material and provided on the mounting ring (10), and has a lip sliding surface (21a) brought into close contact with the other of the outer peripheral surface (101) of the shaft portion (100) and the inner peripheral surface (201) of the gear portion (200), wherein an oil flow path portion (30) that allows axial circulation of a lubricant is formed in a position across the mounting ring (10) and the elastic ring member (20) and apart from the lip sliding surface (21a), and/or an oil flow path portion (30) that allows axial circulation of a lubricant is formed in a position in the mounting ring (10) and apart from the lip sliding surface (21a).

## Description

### TECHNICAL FIELD

The present invention relates to a balance shaft friction damper of an internal combustion engine, and more particularly to a balance shaft friction damper capable of maintaining high rotation torque without preventing circulation of a lubricant.

### BACKGROUND

A balance shaft friction damper of an internal combustion engine is a rubber part having high rotation torque that connects a shaft portion of a balance shaft for reducing vibration of a reciprocating engine, and a gear portion provided on an outer periphery of the shaft portion. The friction damper maintains high torque and thus absorbs vibration, and is also abruptly actuated to damp the torque when the shaft portion of the balance shaft oscillates with respect to the gear portion, thereby preventing damage to a rubber bumper portion for impact absorption provided on the gear portion.

On the other hand, if the torque of the friction damper is insufficient due to degradation of rubber or the like, a problem will occur of damage to the rubber damper portion or damage to the gear portion. Thus, the friction damper needs to maintain high torque.

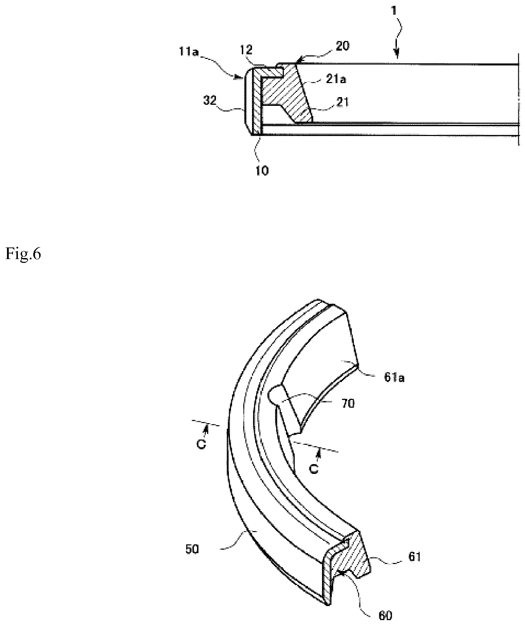

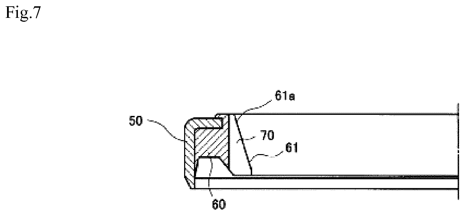

Figures 6 and 7 show an example of a conventional balance shaft friction damper. Figure 6 is a partially fragmentary top illustration of a friction damper, and Figure 7 is a sectional view taken along the line C-C in Figure 6.

The conventional friction damper includes, on an outer peripheral side, a metal mounting ring 50 fitted and secured to an inner peripheral surface of a gear portion, and on an inner peripheral side, an integrally-molded elastic ring member 60 made of a rubber-like elastic material provided on the mounting ring 50. A lip portion 61 is provided on an inner peripheral side of the elastic ring member 60, and an inner peripheral surface of the lip portion 61 is a lip sliding surface 61a brought into close contact with an outer peripheral surface of a shaft portion of a balance shaft. A plurality of notch portions 70 for allowing axial circulation of a lubricant around the gear portion are formed in the lip sliding surface 61a of the elastic ring member 60.

Patent Document 1 describes a friction damper having an integrally-molded elastic ring member provided on an outer peripheral side of a core metal, wherein slide contact portions protruding radially outward are formed in an integrated manner at intervals on a plurality of circumferential areas of the elastic ring member, and spaces are provided in the slide contact portions to allow the slide contact portions to be easily compression deformed in fitting to obtain high friction with slight interference.

### PRIOR ART DOCUMENT

### PATENT DOCUMENT

Patent Document 1: JP-U-63-187748

### SUMMARY OF THE INVENTION

### PROBLEM TO BE SOLVED BY THE INVENTION

The friction damper must not seal the lubricant. For this reason, in the friction damper shown in Figures 6 and 7, the notch portions 70 for allowing axial circulation of the lubricant are formed in the lip sliding surface 61a of the elastic ring member 60. In Patent Document 1, spaces between the plurality of slide contact portions protruding radially outward axially communicate with each other, and the spaces between the slide contact portions allow axial circulation of the lubricant.

However, in the conventional friction damper, the lubricant flows through the notch portions or groove portions between the slide contact portions formed in the elastic ring member, and if high rotation torque is applied to the friction damper to cause the elastic ring member to slide with respect to a mating member, there is the lubricant in the notch portions or the groove portions. Thus, sliding of the friction damper may cause the lubricant to flow onto the lip sliding surface other than the notch portions. If the lubricant flows onto the lip sliding surface of the elastic ring member, friction between the lip sliding surface and the mating member brought into close contact therewith is decreased to reduce the torque, which prevents proper transfer of the rotation torque of the gear portion to the shaft portion of the balance shaft.

Since the lip sliding surface is radially compression deformed with respect to the mating member to obtain intended friction, the notch portions or the groove portions formed in the lip sliding surface are also deformed in compression deformation to narrow a flow path, which makes it difficult to axially stably circulate the lubricant.

In the friction damper described in Patent Document 1, the lubricant circulates through the axial spaces in the outer periphery of the elastic ring member, between adjacent slide contact portions. In this state, the friction damper is fitted with the slide contact portions being compression deformed. However, because of a small contact area of the slide contact portions, friction between a fitting surface and a mating member brought into close contact therewith may be decreased to reduce the torque, which prevents proper transfer of the rotation torque of the gear portion to the shaft portion of the balance shaft.

Thus, the present invention has an object to provide a balance shaft friction damper capable of preventing a torque reduction of a lip sliding surface while ensuring an axial flow path for a lubricant to stably circulate the lubricant.

Other objects of the present invention will be apparent from the descriptions below.

### MEANS FOR SOLVING PROBLEM

The above-described problems are solved by the following respective inventions.

1. A balance shaft friction damper comprising:
   a metal mounting ring that is mounted in an annular gap between a shaft portion of a balance shaft of an engine and a gear portion provided on an outer periphery of the shaft portion, and has a fitting surface fitted to one of an outer peripheral surface of the shaft portion and an inner peripheral surface of the gear portion; and
   an annular elastic ring member made of a rubber-like elastic material and provided on the mounting ring, and has a lip sliding surface brought into pressure contact with the other of the outer peripheral surface of the shaft portion and the inner peripheral surface of the gear portion,
   wherein an oil flow path portion that allows axial circulation of a lubricant is formed in a position across the mounting ring and the elastic ring member and apart from the lip sliding surface, and/or an oil flow path portion that allows axial circulation of a lubricant is formed in a position in the mounting ring and apart from the lip sliding surface.
2. The balance shaft friction damper according to 1, wherein the mounting ring includes an axially extending cylindrical portion that forms the fitting surface, and an annular flange portion integrally formed to radially extend from one axial end of the cylindrical portion, and
   the oil flow path portion is an oil flow path hole formed to axially extend across the elastic ring member and the flange portion in a position apart from the lip sliding surface.
3. The balance shaft friction damper according to 1, wherein the oil flow path portion is an oil flow path groove formed in the fitting surface of the mounting ring.

### EFFECT OF THE INVENTION

According to the present invention, a balance shaft friction damper can be provided that is capable of preventing a torque reduction of a lip sliding surface while ensuring an axial flow path for a lubricant to stably circulate the lubricant.

### BRIEF DESCRIPTION OF DRAWINGS

[Figure 1] Figure 1 is a partially fragmentary top illustration of an example of a balance shaft friction damper according to the present invention.
[Figure 2] Figure 2 is a sectional illustration taken along the line A-A in Figure 1.
[Figure 3] Figure 3 is a partial sectional view of a balance shaft with the friction damper in Figures 1 and 2 being mounted.
[Figure 4] Figure 4 is a partially fragmentary top illustration of another example of a balance shaft friction damper according to the present invention.
[Figure 5] Figure 5 is a sectional illustration taken along the line B-B in Figure 4.
[Figure 6] Figure 6 is a partially fragmentary top illustration of a balance shaft friction damper according to a conventional example.
[Figure 7] Figure 7 is a sectional illustration taken along the line C-C in Figure 6.

### DESCRIPTION OF THE PREFERRED EMBODIMENTS

Now, an embodiment of a balance shaft friction damper (hereinafter, simply referred to as friction damper) according to the present invention will be described with reference to the drawings.

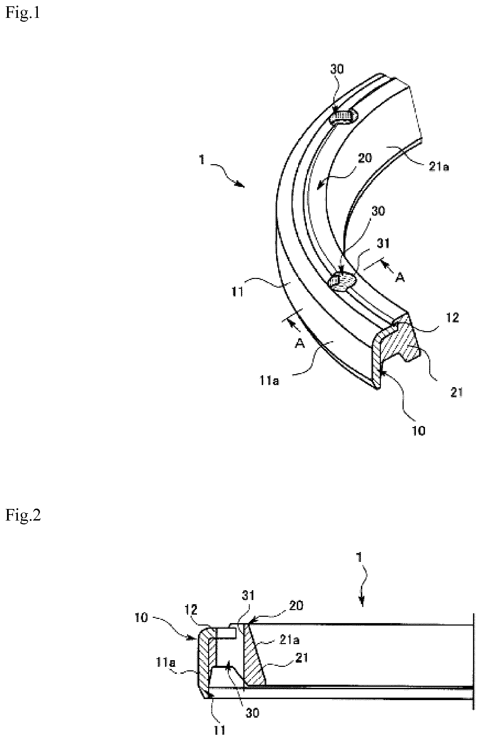

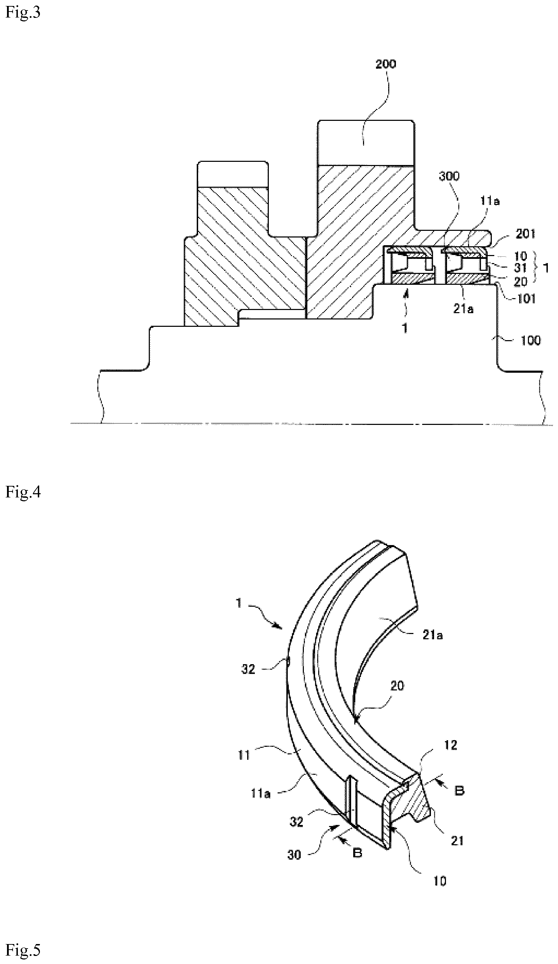

Figure 1 is a partially fragmentary top illustration of an example of a friction damper according to the present invention, Figure 2 is a sectional illustration taken along the line A-A in Figure 1, and Figure 3 is a partial sectional view of a balance shaft with the friction damper in Figures 1 and 2 being mounted.

A friction damper 1 shown in Figures 1 and 2 includes a metal mounting ring 10, and an annular elastic ring member 20 made of a rubber-like elastic material provided on an inner peripheral side of the mounting ring 10.

The mounting ring 10 is fabricated by, for example, press molding a metal plate such as a steel plate, and includes an axially extending cylindrical portion 11, and a flange portion 12 formed integrally with the cylindrical portion 11. The flange portion 12 is bent so as to extend radially inward from one axial end of the cylindrical portion 11. In the present embodiment, an outer peripheral surface of the cylindrical portion 11 forms a fitting surface 11a that fits an inner peripheral surface 201 (see Figure 3) of a gear portion 200 provided on an outer periphery of a shaft portion 100 of the balance shaft.

Preferably, the elastic ring member 20 is integrally molded from the flange portion 12 to the inner peripheral surface of the cylindrical portion 11 with use of the rubber-like elastic material. The rubber-like elastic material is not particularly limited, but preferably has low compression set and high abrasion resistance.

The elastic ring member 20 has, on its inner peripheral surface axially opposite to the fitting surface 11a of the mounting ring 10, a lip portion 21 inclined radially inward from a side of the flange portion 12 toward a front end. In the present embodiment, the inner peripheral surface of the lip portion 21 forms a lip sliding surface 21a brought into pressure contact with an outer peripheral surface 101 (see Figure 3) of the shaft portion 100 of the balance shaft.

In the present embodiment, an oil flow path portion 30 that allows axial circulation of the lubricant is formed to axially extend between the fitting surface 11a of the mounting ring 10 and the lip sliding surface 21a of the elastic ring member 20. Specifically, the oil flow path portion 30 in the present embodiment is constituted by an oil flow path hole 31 formed to axially extend across the elastic ring member 20 and the flange portion 12 between the fitting surface 11a of the mounting ring 10 and the lip sliding surface 21 a of the elastic ring member 20.

The oil flow path hole 31 in the present embodiment is a substantially semicircular notch in an inner peripheral edge of the flange portion 12 and axially penetrates the elastic ring member 20 between the fitting surface 11a and the lip sliding surface 21a. Since the oil flow path hole 31 does not reach the lip sliding surface 21 a, the lubricant does not flow out onto the lip sliding surface 21a from the oil flow path hole 31. This eliminates the possibility of a torque reduction due to the lubricant flowing onto the lip sliding surface 21a.

A plurality of oil flow path holes 31 are formed at intervals circumferentially of the friction damper 1. A diameter of the oil flow path hole 31 depends on a size of the flange portion 12, or a relationship between the number of the oil flow path holes 31 formed in the friction damper 1 and an amount of circulated lubricant, or the like.

As shown in Figures 1 and 2, the oil flow path hole 31 may be formed to extend in parallel with an axial direction of the friction damper 1, but is not limited to this. For example, the oil flow path hole 31 may be formed to extend with an angle so as to be slightly circumferentially inclined with respect to the axial direction of the friction damper 1, although not shown.

As shown in Figure 3, such a friction damper 1 is mounted in an annular gap 300 between the shaft portion 100 of the balance shaft of the engine and the gear portion 200 provided on the outer periphery of the shaft portion 100. Specifically, the fitting surface 11a of the mounting ring 10 is fitted and secured to the inner peripheral surface 201 of the gear portion 200, the lip portion 21 of the elastic ring member 20 is radially compressed against the outer peripheral surface 101 of the shaft portion 100 of the balance shaft, and the lip sliding surface 21 a is brought into close contact with the outer peripheral surface 101.

In the present embodiment, the oil flow path hole 31 is formed as the oil flow path portion 30, and unlike conventional cases, a notch portion that forms a flow path for a lubricant is not formed in the lip sliding surface 21 a of the elastic ring member 20. Thus, an entire surface of the lip sliding surface 21a can be brought into close contact with the outer peripheral surface 101 of the shaft portion 100 of the balance shaft. At this time, the lubricant axially circulates through the oil flow path hole 31. However, the oil flow path hole 31 does not extend through the lip sliding surface 21 a, and thus even if the lip sliding surface 21a slides with respect to the outer peripheral surface 101 of the shaft portion 100 of the balance shaft, no lubricant flows in between the lip sliding surface 21a and the outer peripheral surface 101.

From the above, the friction damper 1 can prevent a torque reduction of the lip sliding surface 21a due to flowing out of the lubricant, obtain high friction with respect to the shaft portion 100 of the balance shaft, and properly transfer the rotation torque of the gear portion 200 to the shaft portion 100.

Also, the oil flow path hole 31 is formed across the elastic ring member 20 and the flange portion 12 of the mounting ring 10, and thus even if the lip portion 21 is radially compression deformed by the friction damper 1 being mounted in the annular gap 300, an opening shape of the oil flow path hole 31 is retained by the metal flange portion 12, which prevents the oil flow path hole 31 from being deformed and completely collapsed. Thus, in the mounted state, the oil flow path hole 31 can ensure the axial flow path for the lubricant and stably circulate the lubricant.

Next, another example of a friction damper according to the present invention will be described.

Figure 4 is a partially fragmentary top illustration of another example of the friction damper according to the present invention, and Figure 5 is a sectional illustration taken along the line B-B in Figure 4. The same reference numerals as in Figures 1 to 3 denote the same components, and thus descriptions thereof will be omitted here by citing the descriptions with reference to Figures 1 to 3.

In the present embodiment, an oil flow path portion 30 that allows axial circulation of a lubricant is formed in a mounting ring 10. Thus, also in the present embodiment, no flow path for the lubricant is formed in a lip sliding surface 21a. Specifically, the oil flow path portion 30 in the present embodiment is constituted by an oil flow path groove 32 formed in a fitting surface 11a of the mounting ring 10. The oil flow path groove 32 is formed in the fitting surface 11a of a cylindrical portion 11 of the mounting ring 10 so as to cross the cylindrical portion 11 over an entire axial length of the cylindrical portion 11.

A plurality of oil flow path grooves 32 are formed at intervals circumferentially of the friction damper 1. A width of the groove depends on a relationship between the number of the grooves formed in the friction damper 1 and an amount of circulated lubricant, or the like. A depth of the groove is smaller than a thickness of the cylindrical portion 11 of the mounting ring 10. This prevents strength of the cylindrical portion 11 of the mounting ring 10 from being significantly reduced.

The oil flow path groove 32 is generally formed by cutting the fitting surface 11a of the cylindrical portion 11 of the mounting ring 10 into a groove, but not limited to this. For example, a plurality of circumferentially separate plates may be bonded or welded at circumferential intervals to an outer peripheral surface of the cylindrical portion 11 so as to form a groove portion, that is, the oil flow path groove 32 between circumferentially adjacent plates. In this case, an outer peripheral surface of each plate forms the fitting surface 11 a.

As shown in Figures 4 and 5, the oil flow path groove 32 may be formed to extend in parallel with an axial direction of the friction damper 1, but is not limited to this. For example, the oil flow path groove 32 may be formed with an angle so as to be slightly circumferentially inclined with respect to the axial direction of the friction damper 1.

The friction damper 1 according to the present embodiment is also mounted in an annular gap 300 between a shaft portion 100 of the balance shaft of the engine and a gear portion 200 provided on an outer periphery of the shaft portion 100 shown in Figure 3. Thus, similarly to the above, the friction damper 1 can prevent a torque reduction of the lip sliding surface 21a due to flowing out of the lubricant, ensure an axial flow path for the lubricant with the oil flow path groove 32, and stably circulate the lubricant.

Since the oil flow path groove 32 is formed in the fitting surface 11a of the metal mounting ring 10 that does not slide with respect to an inner peripheral surface 201 of the gear portion 200, the lubricant flowing through the oil flow path groove 32 does not flow out onto the fitting surface 11a. Also, as shown in Figure 3, the oil flow path groove 32 formed in the fitting surface 11a of the mounting ring 10 is not at all deformed even when the fitting surface 11a is fitted and secured to the inner peripheral surface 201 of the gear portion 200. This can more stably ensure the axial flow path for the lubricant.

Although not shown, as the oil flow path portion 30, both the oil flow path hole 31 and the oil flow path groove 32 described above may be formed in one friction damper 1. This can ensure a larger flow path for the lubricant.

In the embodiments described above, the mounting ring 10 is provided on the outer peripheral side of the friction damper 1, and the elastic ring member 20 is provided on the inner peripheral side. However, the elastic ring member 20 may be provided on the outer peripheral side of the friction damper 1, and the mounting ring 10 may be provided on the inner peripheral side, so that the inner peripheral surface of the mounting ring 10 as the fitting surface 11a is fitted and secured to the outer peripheral surface 101 of the balance shaft 100.

### EXPLANATIONS OF LETTERS OR NUMERALS

- 1: balance shaft friction damper
- 10: mounting ring
- 11: cylindrical portion
- 11a: fitting surface
- 12: flange portion
- 20: elastic ring member
- 21: lip portion
- 21a: lip sliding surface
- 30: oil flow path portion
- 31: oil flow path hole
- 32: oil flow path groove

## Claims

1. A balance shaft friction damper comprising:
a metal mounting ring that is mounted in an annular gap between a shaft portion of a balance shaft of an engine and a gear portion provided on an outer periphery of the shaft portion, and has a fitting surface fitted to one of an outer peripheral surface of the shaft portion and an inner peripheral surface of the gear portion; and
an annular elastic ring member made of a rubber-like elastic material and provided on the mounting ring, and has a lip sliding surface brought into pressure contact with the other of the outer peripheral surface of the shaft portion and the inner peripheral surface of the gear portion,
wherein an oil flow path portion that allows axial circulation of a lubricant is formed in a position across the mounting ring and the elastic ring member and apart from the lip sliding surface, and/or an oil flow path portion that allows axial circulation of a lubricant is formed in a position in the mounting ring and apart from the lip sliding surface.

2. The balance shaft friction damper according to claim 1, wherein the mounting ring includes an axially extending cylindrical portion that forms the fitting surface, and an annular flange portion integrally formed to radially extend from one axial end of the cylindrical portion, and
the oil flow path portion is an oil flow path hole formed to axially extend across the elastic ring member and the flange portion in a position apart from the lip sliding surface.

3. The balance shaft friction damper according to claim 1, wherein the oil flow path portion is an oil flow path groove formed in the fitting surface of the mounting ring.
